# EUROPEAN PATENT SPECIFICATION

(11) **EP 4 528 321 B1**
(45) Date of publication and mention of the grant of the patent: **22.07.2026**
(21) Application number: 24199550.5
(22) Date of filing: 10.09.2024
(51) Int. Cl.: G01S 7/487

(54) **LIDAR APPARATUS AND CONTROL METHOD THEREOF**
LIDAR-VORRICHTUNG UND STEUERUNGSVERFAHREN DAFÜR
APPAREIL LIDAR ET SON PROCÉDÉ DE COMMANDE

(30) Priority: 20.09.2023 KR 20230125696
(43) Date of publication of application: 26.03.2025
(73) Proprietor: Hyundai Mobis Co., Ltd., Gangnam-gu Seoul 06141 (KR)
(72) Inventor: YOON, Tae Won, 16891 Yongin-si (KR)
(74) Representative: Vossius & Partner Patentanwälte Rechtsanwälte mbB

(56) References cited:
- CN-A- 115 144 863
- JP-A- 2006 322 834
- US-A1- 2004 070 748
- US-A1- 2020 217 965

## Description

### BACKGROUND

### FIELD

Exemplary embodiments of the present disclosure relate to a lidar apparatus and a control method thereof, and more particularly, to a lidar apparatus and a control method thereof, which may set a measurement count differently depending on a distance range to an object when generating a histogram of received signals to measure a distance to an object by transmitting and receiving a laser, or may set a measurement count by comparing the histogram's peak value and limit value while measuring the distance.

### DISCUSSION OF THE BACKGROUND

In general, a lidar sensor detects an object by emitting light and receiving a signal, which is the emitted light reflected from the object, and calculates a distance to the object by measuring the time interval between transmitted and received signals.

In recent years, the lidar sensor has been applied to various devices, including vehicles, drones, and robot vacuum cleaners.

In the lidar sensor, a transmitter emitting laser light and a receiver receiving reflected light form a two-dimensional array. In the lidar sensor, the transmitter and the receiver, emitting and receiving light, respectively, operate constantly using the entire array, thereby consuming more power than necessary regardless of a target to detect.

The constant use of the entire array composed of the transmitter and the receiver leads to heat generation in the lidar sensor.

If the entire array remains in a state of constant operation, accelerated degradation of the lidar sensor itself and noise may occur.

In addition, a 2D lidar sensor composed of a two-dimensional array is effective in object detection and distance calculation using SPAD. However, due to its high sensitivity to light, the 2D lidar sensor is susceptible to significant internal noise and noise interference from outdoor light.

To resolve these limitations, a method has been proposed to measure received data tens to hundreds of times, generate a histogram, and then detect a peak value to determine an effective value.

The related art of the present disclosure is disclosed in Korean Patent Application Publication No.10-2023-0105834 (published on July 12, 2023 and entitled "LIDAR APPARATUS AND OPERATING METHOD FOR THE SAME").

CN 115 144 863 A discloses a method for determining noise level in a lidar, a method of ranging and a lidar. JP2006322834A discloses a distance measuring method wherein before main measurement, preliminary measurement for far and near determination is carried out.

### SUMMARY

After a histogram is generated by accumulating multiple measured values, a distance to an object is measured by detecting a peak value and calculating Time of Flight (ToF).

If a measurement count between frames is fixed at a high value to measure a distant object, a peak value of the histogram becomes saturated when a close object is measured, thereby making it difficult to take accurate distance measurement.

On the other hand, if the measurement count between frames is fixed at a low value to measure a close object, a peak value of the histogram is not sufficiently secured when a distant object is measured, thereby making it difficult to take accurate distance measurement.

For such a lidar apparatus with the fixed measurement count between frames, distance accuracy in a specific distance zone decreases, resulting in degraded performance.

Various embodiments are directed to a lidar apparatus and a control method thereof, which sets a measurement count differently depending on a distance range to an object when generating a histogram of received signals to measure a distance to an object by transmitting and receiving a laser, or may set a measurement count by comparing the histogram's peak value and limit value while measuring the distance.

The present invention is defined by independent claims 1 and 4; the dependent claims describe embodiments of the present invention. In an embodiment, a lidar apparatus includes: a transmission and reception module transmitting a laser signal and receiving a reflected signal reflected from an object; an output module outputting a calculated object distance; a memory storing a measurement count allocated for each distance range; and a processor operatively coupled to the transmission and reception module, the output module, and the memory, wherein after repeating a process of generating a histogram by accumulating the reflected signals received through the transmission and reception module for a set measurement count, the processor calculates an object distance based on a peak value of the histogram and outputs the calculated object distance through the output module, and then modifies, based on the object distance, the set measurement count based on the measurement count allocated for each distance range, to repeat the process of calculating the object distance.

In the present disclosure, the measurement count allocated for each distance range is an optimized measurement count based on a magnitude of the output of the transmission and reception module, and a measurement count increases as the distance increases.

In another embodiment not covered by the claims, a lidar apparatus includes: a transmission and reception module transmitting a laser signal and receiving a reflected signal reflected from an object; an output module outputting a calculated object distance; a memory storing a limit peak value of the histogram; and a processor operatively coupled to the transmission and reception module, the output module, and the memory, wherein the processor repeats a process of generating the histogram by accumulating the reflected signals received through the transmission and reception module, and if a peak value of the histogram is greater than or equal to the limit peak value of the same, the processor calculates an object distance based on the peak value of the histogram and outputs the calculated object distance through the output module.

In still another embodiment not covered by the claims, a lidar apparatus includes: a transmission and reception module transmitting a laser signal and receiving a reflected signal reflected from an object; an output module outputting a calculated object distance; a memory storing a measurement count allocated for each distance range and a limit peak value of a histogram; and a processor operatively coupled to the transmission and reception module, the output module, and the memory, wherein after repeating a process of generating the histogram by accumulating the reflected signals received through the transmission and reception module for a set measurement count, the processor compares a peak value of the histogram with the limit peak value of the same, and if the peak value is less than the limit peak value, the processor repeats the process of generating the histogram; and if the comparison of the peak value and the limit peak value determines that the peak value is greater than or equal to the limit peak value, the processor calculates an object distance based on the peak value of the histogram and outputs the calculated object distance through the output module.

In the present disclosure, the processor modifies, based on the calculated object distance, the set measurement count based on the measurement count allocated for each distance range.

In an embodiment, a control method of a lidar apparatus includes: generating a histogram, by a processor, by accumulating reflected signals received through a transmission and reception module; repeating, by the processor, a process of the generating of the histogram for a set measurement count; after repeating, by the processor, the generating of the histogram for the set number of measurement, calculating, by the processor, an object distance based on a peak value of the histogram and outputting, by the processor, the calculated object distance; and modifying, by the processor, based on the object distance, the set measurement count based on a measurement count allocated for each distance range.

In the present disclosure, the measurement count allocated for each distance range is an optimized measurement count based on a magnitude of the output of the transmission and reception module, and a measurement count increases as the distance increases.

In another embodiment not covered by the claims, a control method of a lidar apparatus includes: repeating, by a processor, a process of generating a histogram by accumulating reflected signals received through a transmission and reception module; while repeating, by the processor, the process of generating the histogram, comparing, by the processor, a peak value of the histogram with a limit peak value of the same ; and calculating, by the processor, an object distance based on the peak value of the histogram and outputting the calculated object distance if the comparison of the peak value and the limit peak value determines that the peak value is greater than or equal to the limit peak value.

In still another embodiment not covered by the claims, a control method of a lidar apparatus includes: generating a histogram, by a processor, by accumulating reflected signals received through a transmission and reception module; repeating, by the processor, a process of the generating of the histogram for a set measurement count; after repeating, by the processor, the generating of the histogram for the set number of measurement, comparing, by the processor, a peak value of the histogram with a limit peak value of the same; repeating, by the processor, the process of the generating of the histogram if the comparison of the peak value and the limit peak value determines that the peak value is less than the limit peak value; and calculating, by the processor, an object distance based on a peak value of the histogram and outputting, by the processor, the calculated object distance if the comparison of the peak value and the limit peak value determines that the peak value is greater than or equal to the limit peak value.

In the present disclosure, the control method of a lidar apparatus further includes modifying, by the processor, based on the object distance, the set measurement count based on a measurement count allocated for each distance range.

The lidar apparatus and the control method thereof according to embodiments of the present disclosure set a measurement count differently depending on a distance range to an object when generating a histogram of received signals to measure a distance to an object by transmitting and receiving a laser, or may set a measurement count by comparing the histogram's peak value and limit value while measuring the distance. Thus, the lidar apparatus and the control method thereof may improve performance of distance measurement by preventing a distance error as well as reduce unnecessary heat generation and power consumption by the transmission and reception module.

### BRIEF DESCRIPTION OF THE DRAWINGS

FIG. 1 is a block diagram showing a lidar apparatus according to an embodiment of the present disclosure.
FIG. 2 is an exemplary view showing a histogram generated through the lidar apparatus according to an embodiment of the present disclosure.
FIG. 3 is a flowchart illustrating a control method of a lidar apparatus according to a first embodiment of the present disclosure.
FIG. 4 is a flowchart illustrating a control method of a lidar apparatus according to a second embodiment of the present disclosure.
FIG. 5 is a flowchart illustrating a control method of a lidar apparatus according to a third embodiment of the present disclosure.

### DETAILED DESCRIPTION OF THE ILLUSTRATED

### EMBODIMENTS

Exemplary embodiments of a lidar apparatus and a control method thereof will be described below with reference to the accompanying drawings. It should be considered that the thickness of each line or the size of each component in the drawings may be exaggeratedly illustrated for clarity and convenience of description. In addition, the terms as used herein are defined in consideration of functions of the present disclosure, and these terms may change depending on a user or operator's intention or practice. Therefore, definitions of these terms will have to be made based on the content herein.

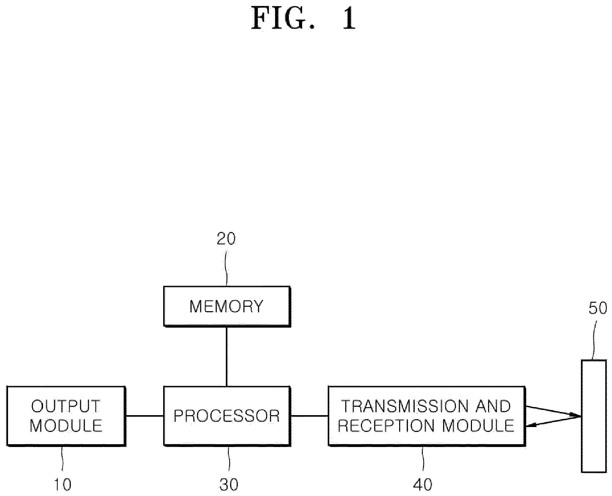

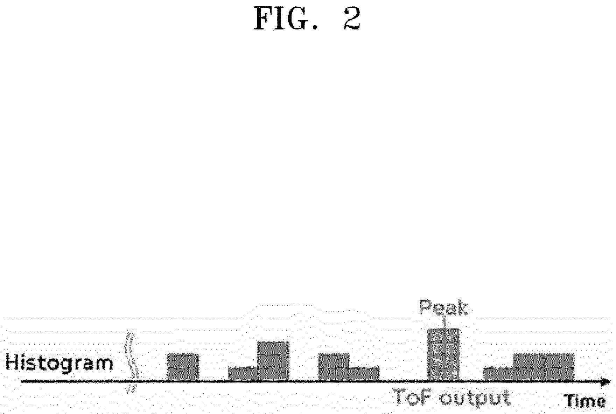

FIG. 1 is a block diagram showing a lidar apparatus according to an embodiment of the present disclosure. FIG. 2 is an exemplary view showing a histogram generated through the lidar apparatus according to an embodiment of the present disclosure.

As shown in FIG. 1, the lidar apparatus according to an embodiment of the present disclosure may include a transmission and reception module 40, an output module 10, a memory 20, and a processor 30.

The transmission and reception module 40 is configured to transmit a laser signal and receive a reflected signal reflected from an object 50.

The output module 10 is configured to output a value of Time of Flight (ToF) of an object distance calculated by the lidar apparatus.

The memory 20 stores various types of software and data generated in the process of executing an operating system or application (program or applet) for operating the lidar apparatus. In this case, the memory 20 refers to both a non-volatile storage device that continues to maintain stored information even when no power is supplied and a volatile storage device that requires power to maintain stored information. In addition, the memory 20 may perform the function of temporarily or permanently storing data processed by the processor 30.

Here, the memory 20 may include a magnetic storage medium or a flash storage medium in addition to a volatile storage device that requires power to maintain stored information, but the scope of the present disclosure is not limited thereto.

The memory (2) stores a measurement count allocated for each distance range, or may store a limit peak value of the histogram.

Here, the measurement count allocated for each distance range is an optimized measurement count based on a magnitude of the output of the transmission and reception module 40, and a measurement count may increase as the distance increases. In this case, the number and interval of distance ranges may be set differently according to user customization.

In addition, the limit peak value may be set to a saturation value that may be processed by the processor 30 when the histogram is generated, or may be set arbitrarily by a user.

The processor 30 is a configuration that is operatively coupled to the transmission and reception module 40 and the memory 10 and controls the overall operation of the lidar apparatus, and may be implemented as an integrated circuit or system.

In other words, to measure a distance to the object 50, the processor 30 operates the transmission and reception module 40 per frame and repeats a process of generating a laser signal and transmitting the same to the object 50 and receiving a reflected signal reflected from the object 50 through the transmission and reception module 40 to calculate the object distance based on a ToF value derived from a difference between the transmission time of the laser signal and the reception time of the reflected signal and output the calculated object distance through the output module 10.

To be more specific, in a first method, the processor 30 may repeat a process of accumulating reflected signals received through the transmission and reception module 40 for a measurement count set per frame to generate a histogram as shown in FIG. 2.

Based on a peak value of the histogram accumulated for the measurement count set per frame, the processor 30 calculates and output an object distance through the output module 10.

Next, based on the calculated object distance, the processor 30 modifies the set measurement count based on the measurement count allocated for each distance range stored in the memory 20. Then, in a next frame, the processor 30 generates the histogram based on the modified measurement count to calculate the object distance.

Varying, based on the object distance, the set measurement count for each distance range in this way may address the issue of reduced distance accuracy in a specific distance zone, thereby improving reliability of distance measurement.

Next, in a second method not according to the claims, the processor 30 may accumulate reflected signals received through the transmission and reception module 40 per frame to repeat the process of generating a histogram. If a peak value of the histogram is greater than or equal to a limit peak value of the same, the processor 30 may calculate and output an object distance based on a peak value of the histogram.

That is, when the set peak limit value based on the peak value of the generated histogram is reached, the object distance is calculated based on the peak value, thereby resolving the difficulty in distance measurement caused by a saturated or insufficiently secured peak value.

In addition, in a third method, the processor 30 may repeat a process of accumulating reflected signals received through the transmission and reception module 40 for a measurement count set per frame to generate a histogram as shown in FIG. 2

Next, the processor 30 compares a peak value of the generated histogram with a limit peak value of the same. If the peak value is less than the limit peak value, the processor 30 repeats the process of generating the histogram to accumulate additional reflected signals, thereby sufficiently securing the peak value for the histogram. If the comparison of the peak value and the limit peak value determines that the peak value is greater than or equal to the limit peak value, the processor 30 may calculate and output an object distance based on the peak value of the histogram.

Next, the processor 30 modifies, based on the calculated object distance, the set measurement count based on the measurement count allocated for each distance range stored in the memory 20. Then, in a next frame, the processor 30 generates the histogram based on the modified measurement count to calculate the object distance.

Varying, based on the object distance, the set measurement count for each distance range in this way may address the issue of reduced distance accuracy in a specific distance zone. Furthermore, after the histogram is repeatedly generated for the set measurement count, additional measurements may be made if the peak value is insufficient, thereby increasing accuracy of distance measurement.

As described above, the lidar apparatus according to embodiments of the present disclosure sets a measurement count differently depending on a distance range to an object when generating a histogram of received signals to measure a distance to an object by transmitting and receiving a laser, or may set a measurement count by comparing the histogram's peak value and limit value while measuring the distance. Thus, the lidar apparatus may improve performance of distance measurement by preventing a distance error as well as reduce unnecessary heat generation and power consumption by the transmission and reception module.

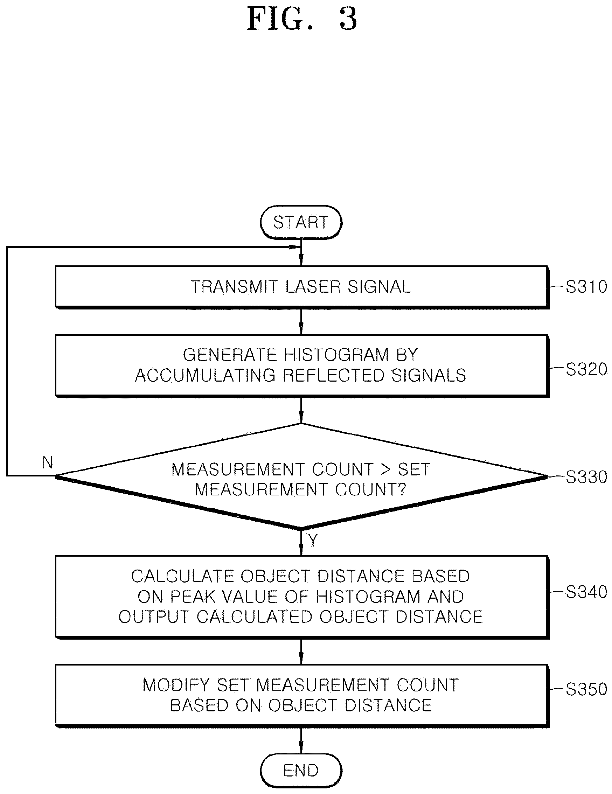

FIG. 3 is a flowchart illustrating a control method of a lidar apparatus according to a first embodiment of the present disclosure.

As shown in FIG. 3, in the control method of the lidar apparatus according to the first embodiment of the present disclosure, the processor 30 first operates the transmission and reception module 40 to transmit a laser signal to the object 50 to measure a distance to the object 50 (S310).

After transmitting the laser signal to the object 50 in step S310, the processor 30 receives a reflected signal reflected from the object 50 through the transmission and reception module 40 and accumulates reflected signals to generate a histogram as shown in FIG. 2 (S320).

After generating the histogram in step S320, the processor 30 counts a measurement count to determine whether the measurement count exceeds a set measurement count (S330).

If the comparison of the measurement count with the set measurement count determines that the measurement count does not exceed the set measurement count in step S330, the processor 30 returns to step S310 and repeats a process of generating the histogram.

On the other hand, if the comparison of the measurement count with the set measurement count determines that the measurement count exceeds the set measurement count in step S330, the processor 30 calculates an object distance based on a peak value of the histogram and outputs the calculated object distance through the output module 10 (S340).

After calculating and outputting the object distance per frame in step S340, the processor 30, based on the calculated object distance, modifies the set measurement count based on a measurement count allocated for each distance range stored in the memory 20 (S350).

Here, the measurement count allocated for each distance range is an optimized measurement count based on a magnitude of the output of the transmission and reception module 40, and a measurement count may increase as the distance increases. In this case, the number and interval of distance ranges may be set differently according to user customization.

Varying, based on the object distance, the set measurement count for each distance range in this way may address the issue of reduced distance accuracy in a specific distance zone, thereby improving reliability of distance measurement.

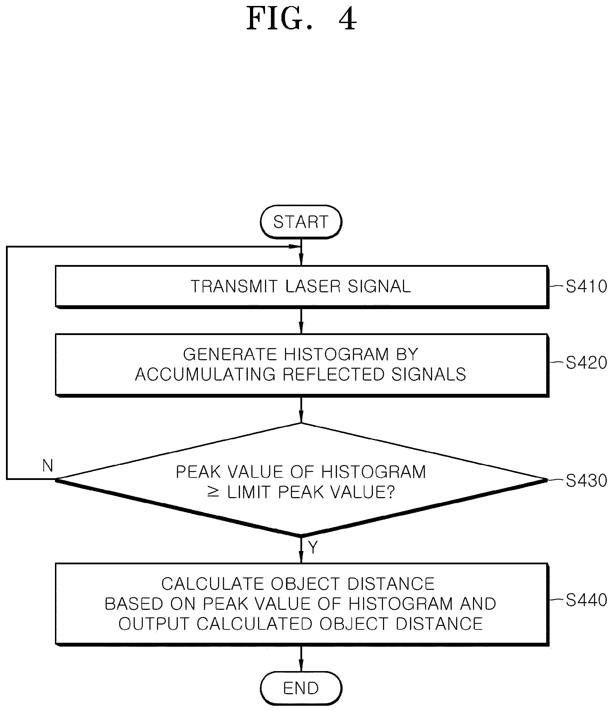

FIG. 4 is a flowchart illustrating a control method of a lidar apparatus according to a second embodiment of the present disclosure not covered by the claims.

As shown in FIG. 4, in the control method of the lidar apparatus according to a second embodiment of the present disclosure, the processor 30 first operates the transmission and reception module 40 to transmit a laser signal to the object 50 to measure a distance to the object 50 (S410).

After transmitting the laser signal to the object 50 in step S410, the processor 30 receives a reflected signal reflected from the object 50 through the transmission and reception module 40 and accumulates reflected signals to generate a histogram as shown in FIG. 2 (S420).

After generating the histogram in step S420, the processor 30 compares a peak value of the histogram and a limit peak value of the same (S430).

Here, the limit peak value may be set to a saturation value that may be processed by the processor 30 when the histogram is generated, or may be set arbitrarily by a user.

If the comparison of the measurement count with the set measurement count determines that the peak value of the histogram is less than the limit peak value of the same in step S430, the processor 30 returns to step S410 and repeats the process of generating the histogram.

On the other hand, if the peak value of the histogram is greater than or equal to the limit peak value of the same in step S430, the processor 30 calculates an object distance based on the peak value of the histogram and outputs the calculated object distance through the output module 10 (S440).

In this way, when the set peak limit value based on the peak value of the generated histogram is reached, the object distance is calculated based on the peak value, thereby resolving the difficulty in distance measurement caused by a saturated or insufficiently secured peak value.

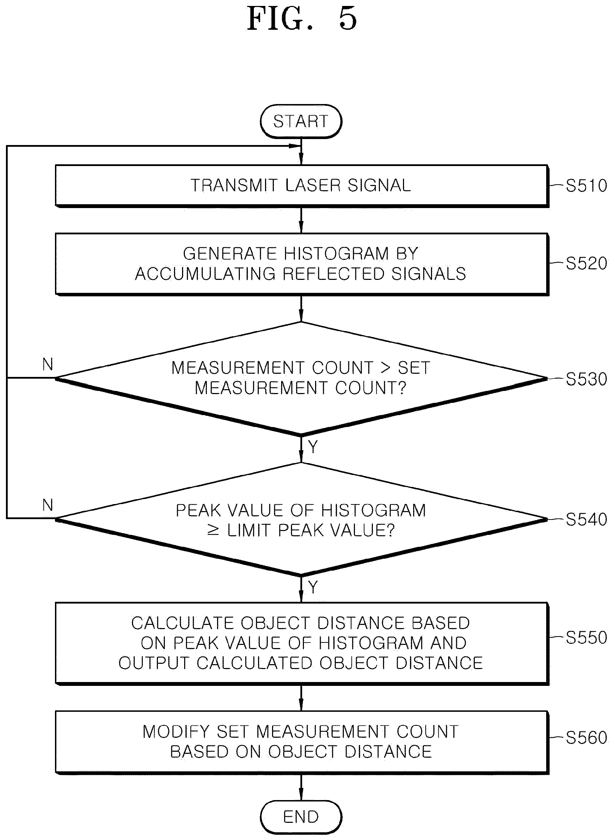

FIG. 5 is a flowchart illustrating a control method of a lidar apparatus according to a third embodiment of the present disclosure.

As shown in FIG. 5, in the control method of the lidar apparatus according to the third embodiment of the present disclosure, the processor 30 first operates the transmission and reception module 40 to transmit a laser signal to the object 50 to measure a distance to the object 50 (S510).

After transmitting the laser signal to the object 50 in step S510, the processor 30 receives a reflected signal reflected from the object 50 through the transmission and reception module 40 and accumulates reflected signals to generate a histogram as shown in FIG. 2 (S520).

After generating the histogram in step S520, the processor 30 counts a measurement count to determine whether the measurement count exceeds a set measurement count (S530).

If the comparison of the measurement count with the set measurement count determines that the measurement count does not exceed the set measurement count in step S530, the processor 30 returns to step S510 and repeats the process of generating the histogram.

On the other hand, if the comparison of the measurement count with the set measurement count determines that the measurement count exceeds the set measurement count in step S530, the processor 30 compares a peak value of the histogram and a limit peak value of the same (S540).

Here, the limit peak value may be set to a saturation value that may be processed by the processor 30 when the histogram is generated, or may be set arbitrarily by a user.

If the comparison of the measurement count with the set measurement count determines that the peak value of the histogram is less than the limit peak value of the same in step S540, the processor 30 returns to step S510 and repeats the process of generating the histogram.

On the other hand, if the peak value of the histogram is greater than or equal to the limit peak value of the same in step S540, the processor 30 calculates an object distance based on the peak value of the histogram and outputs the calculated object distance through the output module 10 (S550).

After calculating and outputting the object distance per frame in step S550, the processor 30 modifies, based on the calculated object distance, the set measurement count based on a measurement count allocated for each distance range stored in the memory 20 (S560).

Varying, based on the object distance, the set measurement count for each distance range in this way may address the issue of reduced distance accuracy in a specific distance zone. Furthermore, after the histogram is repeatedly generated for the set measurement count, additional measurements may be made if the peak value is insufficient, thereby increasing accuracy of distance measurement.

As described above, the control method of the lidar apparatus according to embodiments of the present disclosure sets a measurement count differently depending on a distance range to an object when generating a histogram of received signals to measure a distance to an object by transmitting and receiving a laser, or may set a measurement count by comparing the histogram's peak value and limit value while measuring the distance. Thus, the lidar apparatus may improve performance of distance measurement by preventing a distance error as well as reduce unnecessary heat generation and power consumption by the transmission and reception module.

The embodiments described herein may be implemented in, for example, a method or a process, an apparatus, a software program, a data stream, or a signal. Even if only discussed in the context of a single form of embodiment (e.g., discussed only as a method), the embodiment of features discussed may also be implemented in other forms (e.g., an apparatus or program). A device may be implemented with appropriate hardware, software, and firmware, etc. A method may be implemented in a device, such as a processor, which generally refers to a processing device including, for example, a computer, microprocessor, integrated circuit, or programmable logic device. Processors also include communication devices such as computers, cell phones, personal digital assistants (PDAs) and other devices that facilitate communication of information between end-users.

Although exemplary embodiments of the disclosure have been disclosed for illustrative purposes, those skilled in the art will appreciate that various modifications, additions, and substitutions are possible, without departing from the scope of the disclosure as defined in the accompanying claims.

Thus, the true technical scope of the disclosure should be defined by the following claims.

## Claims

1. A lidar apparatus comprising:
a transmission and reception module (40) transmitting a laser signal and receiving a reflected signal reflected from an object (50);
an output module (10) outputting an object distance;
a memory (20) storing a measurement count allocated for each of a plurality of distance ranges; and
a processor (30) operatively coupled to the transmission and reception module (40), the output module (10), and the memory (20),
wherein the processor (30) is configured to perform a process of generating a histogram by accumulating for a set measurement count, the reflected signals received through the transmission and reception module (40), and to calculate an object distance based on a peak value of the histogram, **characterised in that** the processor is further configured
to modify the set measurement count based on the object distance and the measurement count allocated for each distance range, to generate the histogram based on the modified set measurement count and to calculate the object distance using the modified set measurement count and to output the calculated object distance through the output module (10).

2. The lidar apparatus of claim 1 wherein the
memory (20) is further configured to store a limit peak value of the histogram; and
wherein, if the peak value of the histogram is greater than or equal to the limit peak value of the same, the processor (30) calculates an object distance based on the peak value of the histogram and outputs the calculated object distance through the output module (10).

3. The lidar apparatus of claim 2, the processor (30) compares the peak value with the limit peak value after repeating a process of generating the histogram for at least a set measurement count.

4. A control method of a lidar apparatus, the control method comprising:
generating a histogram, by a processor (30), by accumulating, for a set measurement count, reflected signals received through a transmission and reception module (40);
calculating, by the processor (30), an object distance based on a peak value of the histogram, **characterised by**
modifying, by the processor (30), the set measurement count based on the object distance and a measurement count allocated for each distance range and stored in a memory (20), and
generating by the processor (30) the histogram based on the modified set measurement count and calculating the object distance using the modified set measurement count and to output the calculated object distance through the output module (10).

## Patentansprüche

1. Lidar-Vorrichtung, aufweisend:
ein Übertragungs- und Empfangsmodul (40), das ein Lasersignal überträgt und ein reflektiertes Signal empfängt, das von einem Objekt (50) reflektiert wird;
ein Ausgabemodul (10), das eine Objektentfernung ausgibt;
einen Speicher (20), der eine Messanzahl speichert, die für jeden mehrerer Entfernungsbereiche zugewiesen wird;
und
einen Prozessor (30), der mit dem Übertragungs- und Empfangsmodul (40), dem Ausgabemodul (10) und dem Speicher (20) wirkgekoppelt ist,
wobei der Prozessor (30) konfiguriert ist, um einen Prozess eines Erzeugens eines Histogramms durch Akkumulieren für eine festgelegte Messanzahl der reflektierten Signale durchzuführen, die über das Übertragungs- und Empfangsmodul (40) empfangen werden, und um eine Objektentfernung basierend auf einem Scheitelwert des Histogramms zu berechnen, **dadurch gekennzeichnet, dass** der Prozessor ferner konfiguriert ist, um die festgelegte Messanzahl basierend auf der Objektentfernung und der Messanzahl zu modifizieren, die für jeden Entfernungsbereich zugewiesen wird, um das Histogramm basierend auf der modifizierten festgelegten Messanzahl zu erzeugen und die Objektentfernung unter Verwendung der modifizierten festgelegten Messanzahl zu berechnen und um die berechnete Objektentfernung über das Ausgabemodul (10) auszugeben.

2. Lidar-Vorrichtung nach Anspruch 1, wobei der
Speicher (20) ferner konfiguriert ist, um einen Grenzscheitelwert des Histogramms zu speichern; und
wobei, falls der Scheitelwert des Histogramms größer als oder gleich dem Grenzscheitelwert desselben ist, der Prozessor (30) eine Objektentfernung basierend auf dem Scheitelwert des Histogramms berechnet und die berechnete Objektentfernung über das Ausgabemodul (10) ausgibt.

3. Lidar-Vorrichtung nach Anspruch 2, wobei der Prozessor (30) den Scheitelwert mit dem Grenzscheitelwert vergleicht, nachdem ein Prozess des Erzeugens des Histogramms für mindestens eine festgelegte Messanzahl wiederholt wurde.

4. Steuerungsverfahren einer Lidar-Vorrichtung, wobei das Steuerungsverfahren aufweist:
Erzeugen eines Histogramms, durch einen Prozessor (30), durch Akkumulieren, für eine festgelegte Messanzahl, reflektierter Signale, die über ein Übertragungs- und Empfangsmodul (40) empfangen werden;
Berechnen, durch den Prozessor (30), einer Objektentfernung basierend auf einem Scheitelwert des Histogramms, **gekennzeichnet durch**
Modifizieren, durch den Prozessor (30), der festgelegten Messanzahl basierend auf der Objektentfernung und einer Messanzahl, die für jeden Entfernungsbereich zugewiesen wird und in einem Speicher (20) gespeichert ist, und
Erzeugen durch den Prozessor (30) des Histogramms basierend auf der modifizierten festgelegten Messanzahl und Berechnen der Objektentfernung unter Verwendung der modifizierten festgelegten Messanzahl und Ausgeben der berechneten Objektentfernung über das Ausgabemodul (10).

## Revendications

1. Appareil lidar comprenant :
un module de transmission et de réception (40) transmettant un signal laser et recevant un signal réfléchi réfléchi à partir d'un objet (50) ;
un module de sortie (10) délivrant en sortie une distance d'objet ;
une mémoire (20) stockant un compte de mesures attribué pour chacune d'une pluralité de plages de distance ;
et
un processeur (30) couplé de manière fonctionnelle au module de transmission et de réception (40), au module de sortie (10) et à la mémoire (20),
dans lequel le processeur (30) est configuré pour réaliser un processus consistant à générer un histogramme en accumulant, pour un compte de mesures défini, les signaux réfléchis reçus par l'intermédiaire du module de transmission et de réception (40), et pour calculer une distance d'objet sur la base d'une valeur de crête de l'histogramme, **caractérisé en ce que** le processeur est en outre configuré pour modifier le compte de mesures défini sur la base de la distance d'objet et du compte de mesures attribué pour chaque plage de distance afin de générer l'histogramme sur la base du compte de mesures défini modifié et pour calculer la distance d'objet à l'aide du compte de mesures défini modifié et pour délivrer en sortie la distance de l'objet calculée par l'intermédiaire du module de sortie (10).

2. Appareil lidar selon la revendication 1, dans lequel la
mémoire (20) est en outre configurée pour stocker une valeur de crête limite de l'histogramme ; et
dans lequel, si la valeur de crête de l'histogramme est supérieure ou égale à la valeur de crête limite de celui-ci, le processeur (30) calcule une distance d'objet sur la base de la valeur de crête de l'histogramme et délivre en sortie la distance d'objet calculée par l'intermédiaire du module de sortie (10).

3. Appareil lidar selon la revendication 2, le processeur (30) compare la valeur de crête à la valeur de crête limite après la répétition d'un processus consistant à générer l'histogramme pour au moins un compte de mesures défini.

4. Procédé de commande d'un appareil lidar, le procédé de commande comprenant :
la génération d'un histogramme, par un processeur (30), en accumulant, pour un compte de mesures défini, des signaux réfléchis reçus par l'intermédiaire d'un module de transmission et de réception (40) ;
le calcul, par le processeur (30), d'une distance d'objet sur la base d'une valeur de crête de l'histogramme, **caractérisé par**
la modification, par le processeur (30), du compte de mesures défini sur la base de la distance d'objet et d'un compte de mesures attribué pour chaque plage de distance et stocké dans une mémoire (20), et
la génération, par le processeur (30), de l'histogramme sur la base du compte de mesures défini modifié, et le calcul de la distance de l'objet à l'aide du compte de mesures défini modifié, et pour délivrer en sortie la distance d'objet calculée par l'intermédiaire du module de sortie (10).
